# EUROPÄISCHE PATENTSCHRIFT

(11) **EP 1 298 881 B1**
(45) Veröffentlichungstag und Bekanntmachung des Hinweises auf die Patenterteilung: **16.03.2016**
(21) Anmeldenummer: 02102365.0
(22) Anmeldetag: 17.09.2002
(51) Int. Cl.: H04L 29/06, H04L 12/66

(54) **Übertragungsverfahren und Netzübergangseinrichtung zur Echtzeitkommunikation zwischen paketorientierten Kommunikationsnetzen**
Transmission method and network gateway apparatus for real-time communication between packet-oriented communication networks
Prcédé de transmission et passerelle pour la communication en temps réel entre des réseaux de communication orientés paquet

(30) Priorität: 28.09.2001 DE 10147979
(43) Veröffentlichungstag der Anmeldung: 02.04.2003
(73) Patentinhaber: Unify GmbH & Co. KG, 81379 München (DE)
(72) Erfinder: Kramer, Richard, 81241 München (DE)
(74) Vertreter: Fritzsche, Thomas

(56) Entgegenhaltungen:
- EP-A- 0 841 831
- WO-A-97/38434
- WO-A-03/028333
- HUI S C ET AL: "Towards a standards-based Internet telephony system" COMPUTER STANDARDS AND INTERFACES, ELSEVIER SEQUOIA. LAUSANNE, CH, Bd. 19, Nr. 2, März 1998 (1998-03), Seiten 89-103, XP004122816 ISSN: 0920-5489
- CHEN J-H ED - INSTITUTE OF ELECTRICAL AND ELECTRONICS ENGINEERS: "A HIGH-FIDELITY SPEECH AND AUDIO CODEC WITH LOW DELAY AND LOW COMPLEXITY" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY : IEEE, US, Bd. VOL. 2 OF 6, 5. Juni 2000 (2000-06-05), Seiten 1161-1164, XP001072097 ISBN: 0-7803-6294-2
- ITU-T: "Coding of Speech at 8 kbit/s Using Conjugate-Structure Algebraic-Code-Excited Linear Prediction (CS-ACELP)", INTERNET CITATION, March 1996 (1996-03), pages 1-36, XP002580317, Retrieved from the Internet: URL:http://www.itu.int/rec/T-REC-G.729/en [retrieved on 2010-04-29]
- REDWAN SALAMI ET AL: "Design and Description of CS-ACELP: A Toll Quality 8 kb/s Speech Coder", IEEE TRANSACTIONS ON SPEECH AND AUDIO PROCESSING, IEEE SERVICE CENTER, NEW YORK, NY, US, vol. 6, no. 2, 1 March 1998 (1998-03-01), XP011054298, ISSN: 1063-6676

## Beschreibung

In zeitgemäßen Kommunikationssystemen werden Echtzeitverbindungen, z.B. zur Sprach-, Video- oder Multimediakommunikation, in zunehmendem Maße auch über paketorientierte Kommunikationsnetze, wie z.B. lokale Netze (LAN: Local Area Network) oder Weitverkehrsnetze (WAN: Wide Area Network), geführt. Auf dieser Technik basiert beispielsweise die sogenannte Internettelefonie, die häufig auch als VoIP-Telefonie (VoIP: Voice/Video over Internet Protocol) bezeichnet wird.

Bekannte Endeinrichtungen zur paketorientierten Echtzeitkommunikation weisen in der Regel einen sogenannten Kodierer (Codec) auf, z.B. gemäß den ITU-T-Empfehlungen G.729 oder G.723.1, der zu übertragende Echtzeitkommunikationsdaten in Echtzeit komprimiert und in Form von Datenpaketen in ein paketorientiertes Kommunikationsnetz, in der Regel ein lokales Netz, übermittelt. Durch die Komprimierung wird die benötigte Übertragungsbandbreite verringert, so dass auch Echtzeitkommunikationsverbindungen über paketorientierte Kommunikationsnetze mit geringer individuell verfügbarer Übertragungsbandbreite, wie z.B. das Internet, aufgebaut werden können.

Eine derartige Echtzeitkompression von Kommunikationsdaten erfordert jedoch eine verhältnismäßig hohe, von der betreffenden Endeinrichtung zur erbringende Prozessorleistung. Bei einem komprimierenden Kodierer gemäß der ITU-T-Empfehlung G.729 wird beispielsweise eine Prozessorleistung von 9 MIPS benötigt. Eine entsprechende Ausstattung der Endeinrichtungen ist daher in der Regel verhältnismäßig kostenaufwendig. Hinzu kommt, dass bei Verwendung gebräuchlicher Kodierer häufig für jede einzelne Implementierung dieser Kodierer und damit für jede einzelne Endeinrichtung eine Lizenzgebühr zu entrichten ist.

Aus der EP 0 841 831 A1 ist ein Übertragungsverfahren für im Rahmen einer Echtzeitkommunikation zwischen einer Kommunikationsendeinrichtung eines ersten paketorientierten Kommunikationsnetzes, nämlich Internet oder ATM/FR, und einem zweiten paketorientierten Kommunikationsnetz, nämlich ARM/FR bzw. Internet, zu übertragende Datenpakete bekannt, wobei die Datenpakete von der Kommunikationsendeinrichtung über das erste Kommunikationsnetz zu einem Voice-Gateway übertragen werden. Da das Voice-Gateway zwischen verschiedenen Audio-Kodierungen übersetzen kann, kann unterstellt werden, dass für eine gegebene Verbindung in einer der beiden Übertragungseinrichtungen eine Komprimierung vorliegt. D.h., dass die das Voice-Gateway eine Datenkomprimiereinrichtung ist, welche die Datenpakete komprimiert. Die komprimierten Datenpakete werden dann von der Datenkomprimiereinrichtung in das zweite Kommunikationsnetz weitergeleitet.

Es ist Aufgabe der vorliegenden Erfindung, ein Übertragungsverfahren sowie eine Netzübergangseinrichtung zur Echtzeitkommunikation zwischen paketorientierten Kommunikationsnetzen anzugeben, wodurch ein zur Komprimierung und/oder Dekomprimierung von zu übertragenden Echtzeitkommunikationsdaten erforderlicher technischer Aufwand gegenüber dem Stand der Technik verringert wird.

Gelöst wird diese Aufgabe durch ein Übertragungsverfahren mit den Merkmalen des Patentanspruchs 1 sowie durch ein Übertragungsverfahren mit den Merkmalen des Patentanspruchs 2 sowie durch eine Netzübergangseinrichtung mit den Merkmalen des Patentanspruchs 7.

Das erfindungsgemäße Übertragungsverfahren und die erfindungsgemäße Netzübergangseinrichtung dient im wesentlichen zur Echtzeitkommunikation, z.B. zur Sprach-, Video- und/oder Multimediakommunikation, zwischen einer Kommunikationsendeinrichtung eines ersten paketorientierten Kommunikationsnetzes und einem zweiten paketorientierten Kommunikationsnetz. Die Kommunikationsendeinrichtung kann dabei beispielsweise ein sogenanntes IP-Telefon (IP: Internet Protocol), ein Personalcomputer, ein Anwendungsprogramm oder eine Client-Anwendung, jeweils zur paketorientierten Sprach-, Video- und/oder Multimediakommunikation sein.

Erfindungsgemäß werden im Rahmen der Echtzeitkommunikation zu übertragende Datenpakete von der Kommunikationsendeinrichtung über das erste Kommunikationsnetz zu einer Datenkomprimiereinrichtung übertragen, um von dieser komprimiert und in das zweite Kommunikationsnetz weitergeleitet zu werden.

Nach einem ersten Gesichtspunkt der Erfindung kann ein im Rahmen der Echtzeitkommunikation zu übertragender Kommunikationsdatenstrom durch die Kommunikationsendeinrichtung dergestalt auf die Datenpakete aufgeteilt werden, dass sich in aufeinanderfolgende Datenpakete eingefügte Abschnitte des Kommunikationsdatenstroms teilweise überlappen. Dies hat den Vorteil, dass damit ein jeweiliges Datenpaket mit dem darin eingefügten Abschnitt des Kommunikationsdatenstroms durch die Datenkomprimiereinrichtung paketindividuell, d.h. unabhängig von anderen Datenpaketen, mittels eines Prädiktions-Komprimierverfahrens komprimiert werden kann. Dabei kann derjenige Teilabschnitt dieses Abschnittes, der sich mit einem in ein nachfolgendes Datenpaket eingefügten Abschnitt des Kommunikationsdatenstroms überlappt, als sogenannter Look-Ahead für das Prädiktions-Komprimierverfahren verwendet werden. Moderne Prädiktions-Komprimierverfahren erlauben eine sehr hohe Kompressionsrate, benötigen aber, um Kommunikationsdaten eines vorgegebenen Zeitintervalls zu komprimieren, auch Kommunikationsdaten, die dem zu komprimierenden Zeitinterwall zeitlich nachfolgen. Diese dem Zeitintervall zeitlich nachfolgenden Kommunikationsdaten werden als Look-Ahead oder Algorithmic-Look-Ahead bezeichnet. Aufgrund der Überlappung der in den Datenpaketen enthaltenen Abschnitte des Kommunikationsdatenstroms kann der überlappende Teilabschnitt in jedem Datenpaket als Look-Ahead für das Prädikions-Komprimierverfahren verwendet werden, so dass jedes Datenpaket für sich komprimiert werden kann, ohne erst ein nachfolgendes Datenpaket wegen eines benötigten Look-Ahead abwarten zu müssen. Auf diese Weise wird eine durch die Komprimierung bedingte Verzögerung beträchtlich verringert. Vorzugsweise kann ein derartiger Transport von überlappenden Abschnitten des Kommunikationsdatenstroms als neuer Nutzdatentyp für das sogenannte RTP-Protokoll (RTP: Real Time Protocol) vorgesehen werden.

Als vorteilhafte Weiterbildung kann vorgesehen sein, dass der Kommunikationsdatenstrom in nicht überlappenden Abschnitten auf die Datenpakete aufgeteilt wird, wenn die Echtzeitkommunikation auf das erste Kommunikationsnetz beschränkt ist.

Nach einem zweiten Gesichtspunkt der Erfindung wird ein in einem jeweiligen Datenpaket übertragener Teilabschnitt eines im Rahmen der Echtzeitkommunikation zu übertragenden Kommunikationsdatenstroms diesem zugeordnet, z.B. in der Komprimiereinrichtung oder der erfindungsgemäßen Netzübergangseinrichtung, zwischengespeichert, und wird ein entsprechender Teilabschnitt eines nachfolgend übertragenen Datenpakets als Look-Ahead verwendet. Zu diesem Zweck wird der zwischengespeicherte Teilabschnitt einem in dem nachfolgenden Datenpaket übertragenen Abschnitt des Kommunikationsdatenstroms im wesentlichen zeitschlüssig vorangestellt. Der aus dem zwischengespeicherten Teilabschnitt und dem übertragenen Abschnitt zusammengesetzte Abschnitt des Kommunikationsdatenstroms wird dann durch die Datenkomprimiereinrichtung mittels eines Prädikions-Komprimierverfahrens komprimiert, wobei der vorangestellte Teilabschnitt des zusammengesetzten Abschnittes als Look-Ahead für das Prädiktions-Komprimierverfahren verwendet wird. Der letztgenannte Teilabschnitt kann wiederum zwischengespeichert werden, um wiederum einem weiteren, in einem weiteren Datenpaket übertragenen Abschnitt des Kommunikationsdatenstroms vorangestellt zu werden. Auf diese Weise wird durch die Komprimierung nicht der gesamte Kommunikationsdateninhalt eines Datenpaketes sondern nur der in der Praxis verhältnismäßig kleine zwischenzuspeichernde Teilabschnitt des Kommunikationsdatenstroms bis zum Eintreffen eines nachfolgenden Datenpakets verzögert.

Aus dem zweiten Kommunikationsnetz stammende Datenpakete werden erfindungsgemäß einer Datendekomprimiereinrichtung des ersten Kommunikationsnetzes zugeleitet, um von dieser dekomprimiert und über das erste Kommunikationsnetz zur Kommunikationsendeinrichtung übertragen zu werden.

Die Datenkomprimiereinrichtung bzw.
Datendekomprimiereinrichtung kann vorzugsweise zentral für das erste Kommunikationsnetz zuständig sein und/oder in einer erfindungsgemäßen, zwischen das erste und das zweite Kommunikationsnetz zu schaltenden Netzübergangseinrichtung zur Echtzeitkommunikation zwischen den angekoppelten Kommunikationsnetzen angeordnet sein. Vorzugsweise kann die Komprimierung mit einer Verschlüsselung der Datenpakete vor deren Übertragung in das zweite Kommunikationsnetz kombiniert werden.

In einer typischen Anwendungssituation, in der sich die Erfindung als besonders vorteilhaft erweist, ist das erste Kommunikationsnetz beispielsweise als lokales Netz mit hoher Übertragungsbandbreite und das zweite Kommunikationsnetz z.B. als Weitverkehrsnetz mit verhältnismäßig knappen Übertragungsressourcen ausgebildet. Da ein lokales Netz in der Regel eine sehr hohe Übertragungsbandbreite aufweist, kann die zusätzliche Übertragungsbandbreite, die aufgrund einer im wesentlichen unkomprimierten Übertragung der Datenpakete von der Kommunikationsendeinrichtung zur Datenkomprimiereinrichtung benötigt wird, meist vernachlässigt oder zumindest akzeptiert werden. Nach der Komprimierung der Datenpakete werden diese in das Weitverkehrsnetz weitergeleitet, wo aufgrund der Komprimierung nur eine geringe Übertragungsbandbreite belegt wird. Durch die Komprimierung bzw. Dekomprimierung der Datenpakete in einer im ersten Kommunikationsnetz und vorzugsweise in einer Netzübergangseinrichtung zum zweiten Kommunikationsnetz angeordneten Datenkomprimiereinrichtung bzw. Datendekomprimiereinrichtung kann auf eine aufwändige Implementierung einer Komprimier- bzw. Dekomprimierfunktion in jeder einzelnen Kommunikationsendeinrichtung des ersten Kommunikationsnetzes verzichtet werden. Die in einer jeweiligen Kommunikationsendeinrichtung benötigte Prozessorleistung verringert sich dadurch beträchtlich. Darüber hinaus wird bei Verwendung lizenzpflichtiger Komprimierverfahren nicht mehr für jede einzelne Kommunikationsendeinrichtung eine Lizenz benötigt. Die Anzahl benötigter Lizenzen richtet sich vielmehr nach der wesentlich geringeren Maximalanzahl von gleichzeitig vom ersten Kommunikationsnetz in ein externes Kommunikationsnetz aufbaubaren Echtzeitkommunikationsverbindungen.

Ein weiterer Vorteil der Erfindung besteht darin, dass viele Kommunikationsdienste, wie z.B. Konferenzschaltungen oder Sprächerkennung, im wesentlichen unkomprimierte Kommunikationsdaten verarbeiten und somit im ersten Kommunikationsnetz leichter einzubinden sind, wenn dort die Kommunikationsdaten im wesentlichen unkomprimiert übertragen werden.

Vorteilhafte Ausführungsformen und Weiterbildungen der Erfindung sind in den weiteren abhängigen Ansprüchen angegeben.

Nach einer vorteilhaften Weiterbildung der Erfindung kann geprüft werden, ob die Echtzeitkommunikation auf das erste Kommunikationsnetz beschränkt ist. Falls dies zutrifft, wird die Komprimierung nicht durchgeführt.

Ein Ausführungsbeispiel der Erfindung wird nachfolgend anhand der Zeichnung näher erläutert.

Dabei zeigen jeweils in schematischer Darstellung
Fig 1 ein paketorientiertes Kommunikationssystem mit zwei über einen Gateway gekoppelten, paketorientierten Kommunikationsnetzen, sowie
Fig 2 und Fig 3 jeweils ein Ablaufdiagramm zur Veranschaulichung einer Datenpaketbildung.

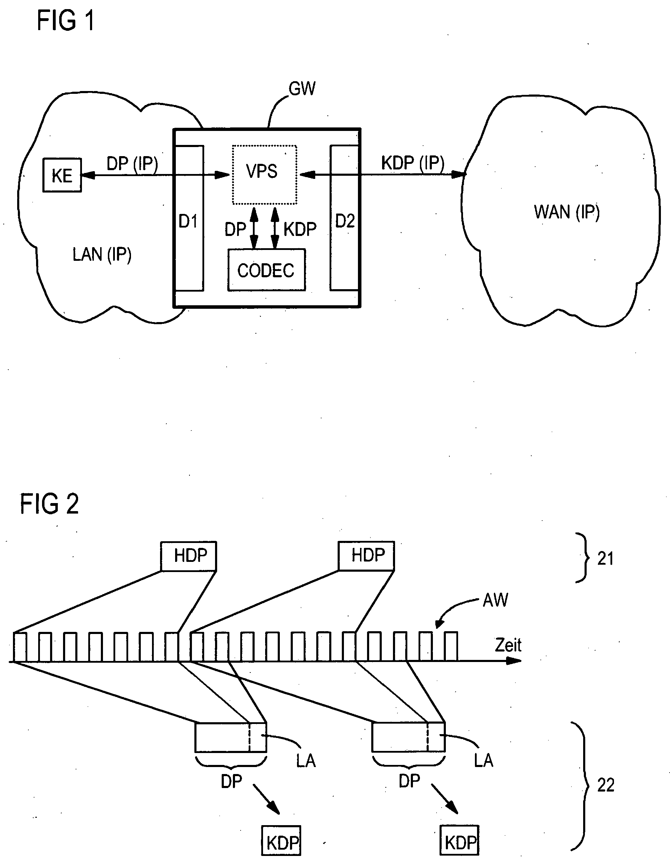

In Fig 1 ist ein paketorientiertes Kommunikationssystem schematisch dargestellt, bei dem ein lokales Netz LAN zur Sprach-, Video- und/oder Multimedia-Echtzeitkommunikation über eine als Gateway GW ausgebildete Netzübergangseinrichtung an ein Weitverkehrsnetz WAN, z.B. das Internet angekoppelt ist. Sowohl das lokale Netz LAN als auch das Weitverkehrsnetz WAN sind paketorientierte Kommunikationsnetze; d.h. ein jeweiliger Datentransport basiert auf asynchron übertragenen Datenpaketen. Im vorliegenden Ausführungsbeispiel werden die Datenpakete in beiden Kommunikationsnetzen LAN und WAN mittels des sogenannten Internetprotokolls IP transportiert, auf dem höhere Übertragungsprotokolle, wie z.B. UDP (User Datagram Protocol) oder TCP (Transmission Control Protocol) aufgesetzt sein können.

Das lokale Netz LAN weist eine Kommunikationsendeinrichtung KE auf, die beispielsweise als Sprach-, Video- oder Multimediatelefon, als Personalcomputer, Kommunikationsanwendung oder als Clientanwendung ausgebildet sein kann.

Der Gateway GW verfügt über eine internetprotokollbasierte Datenschnittstelle D1, über die das lokale Netz LAN angekoppelt ist, und über eine internetprotokollbasierte Datenschnittstelle D2, über die das Weitverkehrsnetz WAN angekoppelt ist. Da die Kommunikationsnetze LAN und WAN mittels des gleichen Netzwerkprotokolls, hier IP, logisch direkt an den Gateway GW angekoppelt sind, tritt bei einer Kommunikation zwischen den Kommunikationsnetzen LAN und WAN zumindest logisch kein für eine Kommunikationsqualität nachteiliger Medienbruch auf. Insbesondere ist keine Umsetzung auf der Transportschicht oder der Netzwerkschicht erforderlich, wodurch sich die Architektur des Gateways GW erheblich vereinfacht.

Im Gateway GW ist weiterhin ein VoIP-fähiger Protokollstapel VPS (VoIP: Voice/Video over Internet Protocol), z.B. gem. der ITU-T-Empfehlung H.323, zur Echtzeitkommunikation zwischen den Kommunikationsnetzen LAN und WAN implementiert. Mittels des Protokollstapels VPS kann der Gateway GW Datenpakete, die im Rahmen einer Echtzeitkommunikation zu übertragen sind, als solche erkennen. Insbesondere erlaubt der Protokollstapel VPS zu unterscheiden, ob Datenpakete einer Sprach-, Video- oder Multimedia-Echtzeitverbindung zugeordnet sind. Weiterhin verfügt der Gateway GW über einen Kodierer CODEC zum Komprimieren und Dekomprimieren vom im Rahmen einer Echtzeitkommunikation zu übertragenden Datenpaketen. Der Kodierer CODEC verwendet hierbei ein spezifisch für die Komprimierung bzw. die Dekomprimierung von Echtzeitkommunikationsdaten, wie z.B. Sprach-, Video- und/oder Multimediadaten, ausgelegtes Komprimier- bzw. Dekomprimierverfahren. Vorzugsweise wird ein Prädikions-Komprimierverfahren, z.B. gem. der ITU-T-Empfehlung G.729 oder G.723.1 verwendet.

Weiterhin kann im Kodierer CODEC auch eine Verschlüsselungsfunktion zum Verschlüsseln von in das Weitverkehrsnetz WAN zu übertragenden Datenpaketen und/oder eine Entschlüsselungsfunktion zum Entschlüsseln von aus dem Weitverkehrsnetz WAN empfangenen Datenpaketen implementiert sein.

Für das vorliegende Ausführungsbeispiel sei angenommen, dass von der Kommunikationsendeinrichtung KE eine Echtzeitsprachverbindung über das lokale Netz LAN und den Gateway GW in das Weitverkehrsnetz WAN führt.

Im Rahmen dieser Echtzeitsprachverbindung wird ein zu übertragender Sprachdatenstrom durch die Kommunikationsendeinrichtung KE auf internetprotokollbasierte Datenpakete DP aufgeteilt, die über das lokale Netz LAN zum Gateway GW übertragen werden. Der innerhalb der Datenpakete DP übertragene Sprachdatenstrom besteht im Wesentlichen aus vorzugsweise gemäß der ITU-T-Empfehlung G.711 kodierten Abtastwerten von im Rahmen der Echtzeitsprachverbindung zu übertragenden Sprachsignalen. Die Abtastwerte werden innerhalb der Datenpakete DP unkomprimiert von der Kommunikationsendeinrichtung KE über das lokale Netz LAN zum Gateway GW übertragen. In der Kommunikationsendeinrichtung KE wird also keine rechenintensive Komprimierung der Sprachdaten vorgenommen.

Die unkomprimierten Datenpakete DP werden vom Gateway GW über die Datenschnittstelle D1 empfangen und mittels des Protokollstapels VPS als der Echtzeitsprachverbindung zugehörig erkannt. Infolgedessen werden die Datenpakete DP im Rahmen ihrer Verarbeitung durch den Protokollstapel VPS dem Kodierer CODEC zugeleitet, der einen Nutzdateninhalt der zugeleiteten Datenpakete DP mittels eines Prädiktions-Komprimierverfahrens komprimiert. Dagegen werden Datenpakete, die nicht als einer Echtzeitkommunikationsverbindung zugehörig erkannt werden, dem Kodierer CODEC nicht zugeleitet, da ein bei Prädiktions-Komprimierverfahrens in der Regel auftretender, geringfügiger Informationsverlust bei Nicht-Kommunikationsdaten im Allgemeinen nicht akzeptabel ist.

Im vorliegenden Ausführungsbeispiel wird der durch den Kodierer CODEC komprimierte Nutzdateninhalt der Datenpakete DP in internetprotokollbasierte Datenpakete KDP eingefügt, die mittels des Protokollstapels VPS über die Datenschnittstelle D2 in das Weitverkehrsnetz WAN übertragen werden. Die Datenpakete KDP mit komprimiertem Nutzdateninhalt werden im Folgenden auch als komprimierte Datenpakete KDP bezeichnet. Die in das Weitverkehrsnetz WAN übertragenen komprimierten Datenpakete KDP können schließlich von einem Verbindungspartner (nicht dargestellt) der Kommunikationsendeinrichtung KE mittels eines entsprechenden Kodierers (nicht dargestellt) dekomprimiert und ausgegeben werden.

Die obigen Ausführungen gelten - wie in Fig 1 durch Doppelpfeile angedeutet - analog auch für eine Übertragung von Echtzeitsprachdaten in umgekehrter Richtung, d.h. aus dem Weitverkehrsnetz WAN über den Gateway GW zur Kommunikationseinrichtung KE. In diesem Fall werden aus dem Weitverkehrsnetz WAN zum Gateway GW übertragene, komprimierte Datenpakete mittels des Kodierers CODEC dekomprimiert und unkomprimiert über das lokale Netz LAN zur Kommunikationseinrichtung KE übertragen. Weiterhin lassen sich die obigen Ausführungen ohne Weiteres auf Übertragungen anderer Arten von Echtzeitkommunikationsdaten, wie z.B. Videodaten und/oder Multimediadaten verallgemeinern.

Durch die Verlagerung der beim bekannten Stand der Technik in einer jeweiligen Kommunikationsendeinrichtung erfolgenden Komprimierung und Dekomprimierung zu einem im Gateway GW angeordneten Kodierer CODEC verringert sich die von einer jeweiligen Kommunikationsendeinrichtung zu erbringende Prozessorleistung beträchtlich. Zudem vermindern sich eventuelle Lizenzkosten, die bei Verwendung lizenzpflichtiger Kodierer anfallen, aufgrund der geringeren Anzahl erforderlicher Kodierer. Durch die unkomprimierte Übertragung der Datenpakete DP im lokalen Netz LAN erhöht sich zwar der Bedarf an Übertragungsbandbreite im lokalen Netz LAN gegenüber dem bekannten Stand der Technik, doch ist dieser erhöhte Bedarf bei modernen, breitbandigen lokalen Netzen meist vernachlässigbar. Der Bandbreitenbedarf im Weitverkehrsnetz WAN wird dagegen aufgrund der im Gateway GW stattfindenden Komprimierung bzw. Dekomprimierung minimiert.

Das zur Kompression verwendete Prädiktions-Komprimierverfahren erlaubt eine hohe Kompressionsrate und komprimiert Echtzeit-Kommunikationsdatenströme mit nur geringer Verzögerung.

Zur Komprimierung eines vorgegebenen Abschnitts eines Kommunikationsdatenstroms benötigt ein derartiges Prädiktions-Komprimierverfahren allerdings einen diesem Abschnitt nachfolgenden Abschnitt des Kommunikationsdatenstroms. Dieser nachfolgende Abschnitt wird häufig auch als Look-Ahead oder Algorithmic-Look-Ahead bezeichnet. So werden z.B. bei einem Prädiktions-Komprimierverfahren gemäß der G.729-Empfehlung zur Komprimierung eines 20ms langen Abschnitts eines Kommunikationsdatenstroms auch die an diesen Abschnitt anschließenden 5ms des Kommunikationsdatenstroms benötigt.

Um zu vermeiden, dass zum Komprimieren eines jeweiligen Datenpakets immer erst ein nachfolgendes Datenpaket mit Look-Ahead-Daten abzuwarten ist, können unterschiedliche, eine Datenpaketbildung betreffende Verfahrensvariänten vorgesehen sein.

Fig 2 zeigt ein Ablaufdiagramm zur Veranschaulichung einer ersten erfindungsgemäßen Paketbildungsvariante. Zum Vergleich wird in einem Figurenabschnitt 21 eine herkömmliche Datenpaketbildung veranschaulicht, bei der ein kontinuierlicher Strom von Abtastwerten AW, z.B. Sprachabtastwerte gemäß der ITU-T-Empfehlung G.711, durch die Kommunikationsendeinrichtung KE in einander nicht überlappenden Abschnitten auf Datenpakete HDP aufgeteilt wird. Demgegenüber veranschaulicht ein Figurenabschnitt 22 die erfindungsgemäße, erste Paketbildungsvariante, bei der ein jeweils benötigter Look-Ahead LA von der Kommunikationsendeinrichtung KE zusätzlich in jedes Datenpaket DP eingefügt wird. Hierbei werden Abschnitte des Stroms von Abtastwerten AW durch die Kommunikationsendeinrichtung KE dergestalt auf die Datenpakete DP aufgeteilt, dass sich die in aufeinanderfolgende Datenpakete DP eingefügten Abschnitte überlappen. Derjenige Teilabschnitt eines jeweils betrachteten Datenpakets, der sich mit einem Abschnitt eines nachfolgenden Datenpakets DP überlappt, bildet dabei den zur Komprimierung erforderlichen Look-Ahead LA für das betrachtete Datenpaket. Die an den Datenpaketgrenzen eingefügten Abtastwerte AW werden somit doppelt übertragen. Eine dadurch bedingte geringfügige Erhöhung der Übertragungsbandbreite ist in der Regel aufgrund der hohen Übertragungskapazitäten im lokalen Netz LAN vernachlässigbar oder zumindest akzeptabel. Dem steht als Vorteil gegenüber, dass die den Look-Ahead LA enthaltenden Datenpakete DP durch den Kodierer CODEC paketindividuell, d.h. unabhängig von anderen Datenpaketen und unabhängig von einem Verbindungszustand, und damit ohne weitere Verzögerung komprimiert und als komprimierte Datenpakete KDP in das Weitverkehrsnetz WAN übertragen werden können.

Vorzugsweise kann vorgesehen sein, dass die überlappende Übertragung der Abtastwerte AW durch die Kommunikationsendeinrichtung KE nur bei Echtzeitkommunikationsverbindungen erfolgt, die das lokale Netz LAN verlassen.

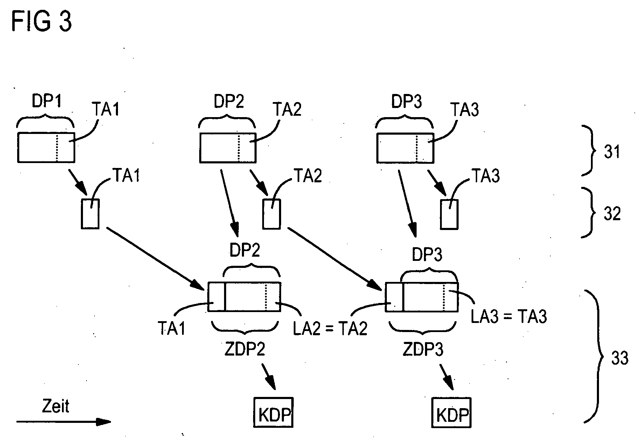

Fig 3 zeigt ein Ablaufdiagramm zur Veranschaulichung einer zweiten erfindungsgemäßen Paketbildungsvariante. Diese zweite Variante ist vorzuziehen, falls ein zusätzliches Einfügen des Look-Ahead gemäß der ersten Verfahrensvariante von der Kommunikationsendeinrichtung KE nicht unterstützt wird.

Im Folgenden sei angenommen, dass der Kodierer CODEC ein Prädiktions-Komprimierverfahren verwendet, das zur Komprimierung von Datenpaketen mit 20ms Länge einen Look-Ahead von 5ms Länge benötigt. (Ein Prädiktions-Komprimierverfahren gemäß G.729-Empfehlung benötigt zur Komprimierung von Datenpaketen mit 10ms Länge ebenfalls einen Look-Ahead von 5ms Länge, während nach G.723.1-Empfehlung ein Look-Ahead von 7,5ms bei einer Frame-Länge von 30ms verwendet wird.)

In Figurenabschnitt 31 sind aufeinanderfolgende Datenpakte DP1, DP2 und DP3 von 20ms Länge schematisch dargestellt, die von der Kommunikationsendeinrichtung KE mit nicht überlappenden Abschnitten des Stroms der Abtastwerte AW gefüllt und zum Gateway GW übertragen werden. Im Gateway GW wird - wie in Figurenabschnitt 32 veranschaulicht - von jedem eintreffenden Datenpaket DP1, DP2 bzw. DP3 jeweils ein aus den letzten 5ms der darin enthaltenen Abtastwerte AW bestehender Teilabschnitt TA1, TA2 bzw. TA3 zwischengespeichert. Die zwischengespeicherten Teilabschnitte TA1, TA2 und TA3 werden dabei dem zu übertragenden Kommunikationsdatenstrom zugeordnet. Wie weiterhin in Figurenabschnitt 33 angedeutet ist, wird ein jeweiliger Teilabschnitt TA1 bzw. TA2 bis zum Eintreffen des jeweils nachfolgenden Datenpakets DP2 bzw. DP3 zwischengespeichert, um dessen jeweiligem Nutzdateninhalt zeitschlüssig vorangestellt zu werden. (Der Teilabschnitt TA3 wird entsprechend einem dem Datenpaket DP3 nachfolgenden Datenpaket (nicht dargestellt) vorangestellt.) Dabei wird durch das Zusammenfügen des Teilabschnittes TA1 mit dem Nutzdateninhalt des Datenpakets DP2 ein zusammengesetzter Abschnitt ZDP2 und durch das Zusammenfügen des Teilabschnittes TA2 mit dem Nutzdateninhalt des Datenpakets DP3 ein zusammengesetzter Abschnitt ZDP3 gebildet. Die zusammengesetzten Abschnitte ZDP2 und ZDP3 haben jeweils eine Länge von 25ms, so dass jeweils die letzten 5ms eines zusammengesetzten Abschnittes ZDP2 bzw. ZDP3 als Look-Ahead LA2 bzw. LA3 verwendet werden können. Die zusammengesetzten Abschnitte ZDP2 und ZDP3 können somit jeweils unabhängig voneinander komprimiert und als komprimierte Datenpakete KDP in das Weitverkehrsnetz WAN übertragen werden.

Bei der zweiten Paketbildungsvariante werden die Datenpakte nur um die Zeitdauer des erforderlichen Look-Ahead verzögert. Bei einer Kompression gemäß dieser Ausführungsvariante beträgt diese Verzögerung nur 5ms.

Diese Verzögerung ist erheblich geringer als die Verzögerung bei einer konventionellen Verfahrensweise, bei der jedes Datenpaket jeweils bis zum Eintreffen des nachfolgenden Datenpakets zwischengespeichert wird, um den erforderlichen Look-Ahead dem nachfolgenden Datenpaket zu entnehmen. In diesem Fall werden die Datenpakte um die gesamte Zeitdauer eines Datenpakets verzögert. Bei einer Kompression gemäß dieser Ausführungsvariante beträgt diese Verzögerung 20ms.

## Patentansprüche

1. Übertragungsverfahren für im Rahmen einer Echtzeitkommunikation zwischen einer Kommunikationsendeinrichtung (KE) eines ersten paketorientierten Kommunikationsnetzes (LAN) und einem zweiten paketorientierten Kommunikationsnetz (WAN) zu übertragende Datenpakete (DP), wobei
- die von der Kommunikationsendeinrichtung (KE) über das erste Kommunikationsnetz (LAN) übertragenen Datenpakete (DP) von einer Datenkomprimiereinrichtung (CODEC) empfangen werden,
- die Datenkomprimiereinrichtung (CODEC) die Datenpakete (DP) komprimiert, und
- die komprimierten Datenpakete (KDP) von der Datenkomprimiereinrichtung (CODEC) in das zweite Kommunikationsnetz (WAN) weitergeleitet werden,
**dadurch gekennzeichnet,**
- **dass** ein im Rahmen der Echtzeitkommunikation zu übertragender Kommunikationsdatenstrom, der durch die Kommunikationsendeinrichtung (KE) dergestalt auf die Datenpakete (DP) aufgeteilt wurde, dass sich in aufeinanderfolgende Datenpakete (DP) eingefügte Abschnitte des Kommunikationsdatenstroms teilweise überlappen, von der Datenkomprimiereinrichtung (CODEC) empfangen wird, und
- **dass** ein jeweiliges Datenpaket (DP) mit dem darin eingefügten Abschnitt des Kommunikationsdatenstroms durch die Datenkomprimiereinrichtung (CODEC) paketindividuell mittels eines Prädiktions-Komprimierverfahrens komprimiert wird, wobei derjenige Teilabschnitt dieses Abschnittes, der sich mit einem in ein nachfolgendes Datenpaket eingefügten Abschnitt des Kommunikationsdatenstroms überlappt, als Look-Ahead (LA) für das Prädiktions-Komprimierverfahren verwendet wird.

2. Übertragungsverfahren für im Rahmen einer Echtzeitkommunikation zwischen einer Kommunikationsendeinrichtung (KE) eines ersten paketorientierten Kommunikationsnetzes (LAN) und einem zweiten paketorientierten Kommunikationsnetz (WAN) zu übertragende Datenpakete (DP1, DP2, DP3), wobei
- die von der Kommunikationsendeinrichtung (KE) über das erste Kommunikationsnetz (LAN) übertragenen Datenpakete (DP1, DP2, DP3) von einer Datenkomprimiereinrichtung (CODEC) empfangen werden,
- die Datenkomprimiereinrichtung (CODEC) die Datenpakete (DP1, DP2, DP3) komprimiert, und
- die komprimierten Datenpakete (KDP) von der Datenkomprimiereinrichtung (CODEC) in das zweite Kommunikationsnetz (WAN) weitergeleitet werden,
**dadurch gekennzeichnet,**
- **dass** ein in einem jeweiligen Datenpaket (DP1, DP2, DP3) übertragener Teilabschnitt (TA1, TA2, TA3) eines im Rahmen der Echtzeitkommunikation zu übertragenden Kommunikationsdatenstroms diesem zugeordnet zwischengespeichert wird,
- **dass** der zwischengespeicherte Teilabschnitt (TA1, TA2, TA3) einem in einem nachfolgenden Datenpaket (DP2, DP3) übertragenen Abschnitt des Kommunikationsdatenstroms zeitschlüssig vorangestellt wird, und
- **dass** der so zusammengesetzte Abschnitt (ZDP3) des Kommunikationsdatenstroms durch die Datenkomprimiereinrichtung (CODEC) mittels eines Prädiktions-Komprimierverfahrens komprimiert wird, wobei der vorangestellte Teilabschnitt (TA2) des zusammengesetzten Abschnitts (ZDP3) als Look-Ahead (LA2) für das Prädiktions-Komprimierverfahren verwendet wird.

3. Übertragungsverfahren nach Anspruch 1 oder 2,
**dadurch gekennzeichnet,**
**dass** die Datenpakete (DP, DP1, DP2, DP3) durch die Datenkomprimiereinrichtung mittels eines für Echtzeitkommunikationsdaten spezifischen Komprimierverfahrens komprimiert werden.

4. Übertragungsverfahren nach einem der vorhergehenden Ansprüche,
**dadurch gekennzeichnet,**
**dass** geprüft wird, ob die Echtzeitkommunikation auf das erste Kommunikationsnetz (LAN) beschränkt ist, und falls dies zutrifft, die Komprimierung nicht durchgeführt wird.

5. Übertragungsverfahren nach Anspruch 1,
**dadurch gekennzeichnet,**
**dass** geprüft wird, ob die Echtzeitkommunikation auf das erste Kommunikationsnetz (LAN) beschränkt ist, und falls dies zutrifft, der Kommunikationsdatenstrom durch die Kommunikationsendeinrichtung (KE) dergestalt auf die Datenpakete (DP) aufgeteilt wird, dass sich in aufeinanderfolgende Datenpakete eingefügte Abschnitte des Kommunikationsdatenstroms nicht überlappen.

6. Übertragungsverfahren nach einem der vorhergehenden Ansprüche,
**dadurch gekennzeichnet,**
- **dass** die aus dem zweiten Kommunikationsnetz (WAN) stammenden Datenpakete (KDP) einer Datendekomprimiereinrichtung (CODEC) des ersten Kommunikationsnetzes (LAN) zugeleitet werden,
- **dass** die Datendekomprimiereinrichtung (CODEC) die aus dem zweiten Kommunikationsnetz (WAN) stammenden Datenpakete (KDP) dekomprimiert, und
- **dass** die dekomprimierten Datenpakete (DP) über das erste Kommunikationsnetz (LAN) zur Kommunikationsendeinrichtung (KE) übertragen werden.

7. Netzübergangseinrichtung (GW) mit Mitteln zur Durchführung des Übertragungsverfahrens nach einem der vorhergehenden Ansprüche für eine Echtzeitkommunikation zwischen an die Netzübergangseinrichtung (GW) gekoppelten, paketorientierten Kommunikationsnetzen (LAN, WAN), mit
einer Datenkomprimiereinrichtung (CODEC) zum Komprimieren und optional einer Datendekomprimiereinrichtung (CODEC) zum Dekomprimieren von im Rahmen der Echtzeitkommunikation zu übertragenden Datenpaketen (DP, D1 D2, D3, KDP).

8. Netzübergangseinrichtung nach Anspruch 7,
**gekennzeichnet durch**
Erkennungsmittel (VPS) zum Erkennen derjenigen Datenpakete (DP, D1 D2, D3, KDP), die im Rahmen einer Echtzeitkommunikation zu übertragen sind und zum Zuleiten der erkannten Datenpakete (DP, D1 D2, D3, KDP) zur Datenkomprimiereinrichtung (CODEC) und optional zur Datendekomprimiereinrichtung (CODEC).

9. Netzübergangseinrichtung nach Anspruch 7 oder 8,
**dadurch gekennzeichnet,**
**dass** die Datenkomprimiereinrichtung (CODEC) und optional die Datendekomprimiereinrichtung (CODEC) mittels eines Kodierers gemäß der ITU-T-Empfehlung G.729 oder G.723.1 realisiert sind.

10. Netzübergangseinrichtung nach einem der Ansprüche 7 bis 9,
**gekennzeichnet durch**
eine Datenverschlüsselungseinrichtung und/oder Datenentschlüsselungseinrichtung zum Verschlüsseln bzw. Entschlüsseln der im Rahmen der Echtzeitkommunikation zu übertragenden Datenpakete (DP, D1, D2, D3, KDP).

## Claims

1. Transmission method for data packets (DP) to be transmitted in the context of real-time communication between a communication terminal device (KE) of a first packet-oriented communication network (LAN) and a second packet-oriented communication network (WAN), wherein
- the data packets (DP) transmitted by the communication terminal device (KE) via the first communication network (LAN) are received by a data compression device (CODEC),
- the data compression device (CODEC) compresses the data packets (DP), and
- the compressed data packets (KDP) are forwarded by the data compression device (CODEC) to the second communication network (WAN),
**characterized in**
- **that** a communication data stream to be transmitted in the context of real-time communication, which is divided by the communication terminal device (KE) into the data packets (DP) in such a manner that sections of the communication data stream that are inserted in consecutive data packets (DP) partially overlap, is received by the data compression device (CODEC), and
- **that** a respective data packet (DP), with the section of the communication data stream inserted therein, is compressed by the data compression device (CODEC) on an individual packet basis by means of a prediction compression method, wherein the segment of this section that overlaps with a section of the communication data stream that has been inserted in a subsequent data packet, is used as look-ahead (LA) for the prediction compression method.

2. Transmission method for data packets (DP1, DP2, DP3) to be transmitted in the context of real-time communication between a communication terminal device (KE) of a first packet-oriented communication network (LAN) and a second packet-oriented communication network (WAN), wherein
- the data packets (DP1, DP2, DP3) transmitted by the communication terminal device (KE) via the first communication network (LAN) are received by a data compression device (CODEC),
- the data compression device (CODEC) compresses the data packets (DP1, DP2, DP3), and
- the compressed data packets (KDP) are forwarded by the data compression device (CODEC) to the second communication network (WAN),
**characterized in**
- **that** a segment (TA1, TA2, TA3) transmitted in a respective data packet (DP1, DP2, DP3), of a communication data stream to be transmitted in the context of real-time communication, is temporarily stored in association with said communication data stream,
- **that** the temporarily stored segment (TA1, TA2, TA3) is put in a position chronologically in front of a section of the communication data stream transmitted in a subsequent data packet (DP2, DP3), and
- **that** the section (ZDP3) of the communication data stream that has been assembled in this manner is compressed by the data compression device (CODEC) by means of a prediction compression method, wherein the segment (TA2) of the assembled sections (ZDP3) that has been put in front is used as look-ahead (LA2) for the prediction compression method.

3. Transmission method according to Claim 1 or 2,
**characterized in**
**that** the data packets (DP, DP1, DP2, DP3) are compressed by the data compression device by means of a compression method specific for real-time communication data.

4. Transmission method according to any one of the preceding claims,
**characterized in**
**that** a verification is conducted to determine whether the real-time communication is limited to the first communication network (LAN), and if this is the case, the compression is not performed.

5. Transmission method according to Claim 1,
**characterized in**
**that** a verification is carried out to determine whether the real-time communication is limited to the first communication network (LAN), and, if this is the case, the communication data stream is divided by the communication terminal device (KE) into the data packets (DP) so that sections of the communication data stream inserted in consecutive data packets do not overlap.

6. Transmission method according to any one of the preceding claims,
**characterized in**
- **that** the data packets (KDP) originating from the second communication network (WAN) are supplied to a data decompression device (CODEC) of the first communication network (LAN),
- **that** the data decompression device (CODEC) decompresses the data packets (KDP) originating from the second communication network (WAN), and
- **that** the decompressed data packets (DP) are transmitted via the first communication network (LAN) to the communication terminal device (KE).

7. Network gateway apparatus (GW) with means for carrying out the transmission method according to any one of the preceding claims for real-time communication between packet-oriented communication networks (LAN, WAN) coupled to the network gateway apparatus (GW), with a data compression device (CODEC) for compressing and optionally a data decompression device (CODEC) for decompressing data packets (DP, D1, D2, D3, KDP) to be transmitted in the context of real-time communication.

8. Network gateway apparatus according to Claim 7,
**characterized by**
detection means (VPS) for detecting those data packets (DP, D1, D2, D3, KDP) that are to be transmitted in the context of real-time communication and for supplying the recognized data packets (DP, D1, D2, D3, KDP) to the data compression device (CODEC) and optionally to the data decompression device (CODEC).

9. Network gateway apparatus according to Claim 7 or 8,
**characterized in**
**that** the data compression device (CODEC) and optionally the data decompression device (CODEC) are implemented by means of an encoder according to the ITU-T recommendation G.729 or G.723.1.

10. Network gateway apparatus according to any one of Claims 7 to 9,
**characterized by**
a data encoding device and/or a data decoding device for encoding or decoding the data packets (DP, D1, D2, D3, KDP) to be transmitted in the context of real-time communication.

## Revendications

1. Procédé de transmission pour des paquets de données (PD) à transmettre dans le cadre d'une communication en temps réel entre un terminal de communication (TC) d'un premier réseau de communication (LAN) orienté paquets et un deuxième réseau de communication (WAN) orienté paquets, sachant
- que les paquets de données (PD) transmis par le terminal de communication (TC) par l'intermédiaire du premier réseau de communication (LAN) sont reçus par un dispositif de compression de données (CODEC),
- que le dispositif de compression de données (CODEC) compresse les paquets de données (PD), et
- que les paquets de données compressés (PDC) sont transférés par le dispositif de compression de données (CODEC) dans le deuxième réseau de communication (WAN),
**caractérisé en ce**
- **qu'**un flux de données de communication à transmettre dans le cadre de la communication en temps réel, lequel est réparti sur les paquets de données (PD) par le terminal de communication (TC) de telle manière que des parties, intégrées dans des paquets de données (PD) successifs, du flux de données de communications sont en partie superposées, est reçu par le dispositif de compression de données (CODEC), et
- en ce qu'un paquet de données (PD) respectif, y compris la partie, intégrée dans ledit paquet de données, du flux de données de communication, est compressé individuellement au moyen d'un procédé de compression par prédiction par le dispositif de compression de données (CODEC), sachant que la partie partielle de ladite partie, qui précisément est superposée avec une partie, intégrée dans un paquet de données suivant, du flux de données de communication, est utilisée en tant que Look-Ahead (LA) ou prédiction pour le procédé de compression par prédiction.

2. Procédé de transmission pour des paquets de données (PD1, PD2, PD3) à transmettre dans le cadre d'une communication en temps réel entre un terminal de communication (TC) d'un premier réseau de communication (LAN) orienté paquets et un deuxième réseau de communication (WAN) orienté paquets, sachant
- que les paquets de données (PD1, PD2, PD3) transmis par le terminal de communication (TC) par l'intermédiaire du premier réseau de communication (LAN) sont reçus par un dispositif de compression de données (CODEC)
- que le dispositif de compression de données (CODEC) compresse les paquets de données (PD1, PD2, PD3), et
- que les paquets de données compressés (PDC) sont transférés par le dispositif de compression de données (CODEC) dans le deuxième réseau de communication (WAN),
**caractérisé en ce**
- **qu'**une partie partielle (PT1, PT2, PT3), transmise dans un paquet de données (PD1, PD2, PD3) respectif, d'un flux de données de communication à transmettre dans le cadre de la communication en temps réel est enregistrée de manière temporaire en étant associée audit flux,
- en ce qu'une partie, transmise dans un paquet de données (PD2, PD3) suivant, du flux de données de communication est précédée chronologiquement de la partie partielle (PT1, PT2, PT3) enregistrée temporairement, et
- en ce que la partie ainsi composée (PDComp3) du flux de données de communication est compressée par le dispositif de compression de données (CODEC) au moyen d'un procédé de compression par prédiction, sachant que la partie partielle (PT2) qui précède de la partie composée (PDCcomp3) est utilisée en tant que Look-Ahead (LA2) ou prédiction pour le procédé de compression par prédiction.

3. Procédé de transmission selon la revendication 1 ou 2,
**caractérisé en ce**
**que** les paquets de données (PD, PD1, PD2, PD3) sont compressés au moyen d'un procédé de compression spécifique à des données de communication en temps réel par le dispositif de compression de données.

4. Procédé de transmission selon l'une quelconque des revendications précédentes,
**caractérisé en ce**
**qu'**on vérifie si la communication en temps réel se limite au premier réseau de communication (LAN), et, si tel est le cas, si la compression n'est pas effectuée.

5. Procédé de transmission selon la revendication 1,
**caractérisé en ce**
**qu'**on vérifie si la communication en temps réel se limite au premier réseau de communication (LAN), et, si tel est le cas, si le flux de données de communication est réparti sur les paquets de données (PD) par le terminal de communication (TC) de telle manière que des parties, intégrées dans des paquets de données successifs, du flux de données de communication ne sont pas superposées.

6. Procédé de transmission selon l'une quelconque des revendications précédentes,
**caractérisé en ce**
- **que** les paquets de données (PDC) provenant du deuxième réseau de communication (WAN) sont acheminés à un dispositif de décompression de données (CODEC) du premier réseau de communication (LAN),
- en ce que le dispositif de décompression de données (CODEC) décompresse les paquets de données (PDC) provenant du deuxième réseau de communication (WAN), et
- en ce que les paquets de données (PD) décompressés sont transmis par l'intermédiaire du premier réseau de communication (LAN) au terminal de communication (TC).

7. Dispositif de passerelle de réseau (GW) comprenant des moyens servant à mettre en oeuvre le procédé de transmission selon l'une quelconque des revendications précédentes pour une communication en temps réel entre des réseaux de communication (LAN, WAN) orientés paquets couplés au dispositif de passerelle de réseau (GW), comprenant
un dispositif de compression de données (CODEC) servant à compresser et, en option, un dispositif de décompression de données (CODEC) servant à décompresser des paquets de données (PD, D1, D2, D3, PDC) à transmettre dans le cadre de la communication en temps réel.

8. Dispositif de passerelle de réseau selon la revendication 7,
**caractérisé par**
des moyens d'identification (VPS) servant à identifier les paquets de données (PD, D1, D2, D3, PDC) qui précisément sont à transmettre dans le cadre d'une communication en temps réel, et servant à acheminer les paquets de données (PD, D1, D2, D3, PDC) identifiés au dispositif de compression de données (CODEC) et, en option, au dispositif de décompression de données (CODEC).

9. Dispositif de passerelle de réseau selon la revendication 7 ou 8,
**caractérisé en ce**
**que** le dispositif de compression de données (CODEC) et, en option, le dispositif de décompression de données (CODEC) sont réalisés en moyen d'un système encodeur selon la Recommandation G.729 ou G.723.1. de l'UIT-T.

10. Dispositif de passerelle de réseau selon l'une quelconque des revendications 7 à 9,
**caractérisé par**
un dispositif de cryptage de données et/ou un dispositif de décryptage de données servant à crypter ou à décrypter les paquets de données (PD, D1, D2, D3, PDC) à transmettre dans le cadre de la communication en temps réel.
